Europäisches Patentamt

European Patent Office

Office européen des brevets

(19)

(11) Veröffentlichungsnummer: **0 141 027**
**A1**

(12) **EUROPÄISCHE PATENTANMELDUNG**

(21) Anmeldenummer: **84107228.3**

(22) Anmeldetag: **23.06.84**

(51) Int. Cl.⁴: **C 09 K 5/06**

(30) Priorität: **18.07.83 CH 3920/83**

(43) Veröffentlichungstag der Anmeldung:
**15.05.85 Patentblatt 85/20**

(84) Benannte Vertragsstaaten:
**AT BE DE FR GB IT NL SE**

(71) Anmelder: **Heierli, Werner**
**Elsastrasse 6**
**CH-4600 Olten(CH)**

(72) Erfinder: **Heierli, Werner**
**Elsastrasse 6**
**CH-4600 Olten(CH)**

(74) Vertreter: **Ryffel, Rolf**
**c/o Hepp Ryffel AG Bahnhofstrasse 58**
**CH-8001 Zürich(CH)**

(54) **Latentwärmespeicher.**

(57) Der Latentwärmespeicher besitzt eine Füllung, die wenigstens eine Salz und/oder Salzhydrat enthält. Ferner enthält die Füllung gleichmässig verteilt Fadenmoleküle von $\alpha$ und/oder $\beta$-Glucose in Form von Cellulose und/oder Stärke. Diesen Fadenmolekülen sind Verästelungsmoleküle in Form von Alkaliperoxyd oder -salz und/oder Salz oder Doppelsalz von dreiwertigem Metall angelagert. Die behandelten Fadenmoleküle stabilisieren die Homogenität der Füllung beim Aggregatzustandswechsel, sie verhindern insbesondere ein Entmischen beim Schmelzen. Dadurch ist anschliessend ein gleichmässiges Rekristallisieren gewährleistet.

EP 0 141 027 A1

Croydon Printing Company Ltd.

## Latentwärmespeicher

Die Erfindung bezieht sich auf einen Latentwärmespeicher mit einer Füllung, die wenigstens ein Speicher-Salz und/oder -Salzhydrat enthält.

Die Verwendung von Salzen und/oder Salzhydraten und/oder Mischungen derselben zur Energiespeicherung, sei es für Kühl- oder Heizzwecke, ist bekannt. Bei der Wärmeabgabe oder Wärmeaufnahme wird die Füllung von Salz bzw. Salzhydrat verfestigt bzw. geschmolzen, wobei jeweils die Schmelzwärme umgesetzt wird.

Reine, völlig wasserfreie Salze lassen sich in vielen Fällen, z.B. für die Heizung von Gebäuden, wegen zu hohen Schmelzpunktes, zu starker Aggressivität und/oder zu hoher Kosten nicht verwenden.

Bei allen anderen Salzen, Salzhydraten und Mischungen scheitert der wirtschaftliche industrielle Einsatz wegen der folgenden negativen Eigenschaften dieser Materialien.

Beim Aufschmelzen der Salze und/oder Salzhydrate entmischen sich diese oder es entstehen wasserarme und wasserreiche Zonen. Dadurch wird die nachfolgende Rekristallisation gestört.

Bei der Entmischung, wie beispielsweise beim Glaubersalz, sinken die nicht schmelzenden Anteile auf den Grund der Behälter, und oben sammelt sich das Wasser. Man hat schon vorgeschlagen, übereinander mehrere flache Behälter (Höhe max. 25 mm) zu verwenden, in denen der jeweilige Anteil an Feststoffen so gering ist, dass eine Rekristallisation noch einigermassen zufriedenstellend möglich ist, ohne dass die Behälter bewegt werden müssen. Der Wirkungsgrad dieser Bauarten ist schlecht, weil oben und unten im Behälter trotzdem noch Kristalle verschiedenen Wassergehaltes entstehen. Zudem ist die Konstruktion mit Einheiten geringen Volumens, die übereinander gestapelt werden, zu teuer.

Andere Salze und/oder Salzhydrate entmischen sich nicht vollständig, sie bilden aber ohne Ausnahme beim Aufschmelzen wasserarme und wasserreiche Zonen bzw. schwere und leichte Zonen, die bei der Rekristallisation dann entsprechende, verschieden energetische und verschieden charakterisierte Kristalle bilden.

Es ist schon vorgeschlagen worden, solche Schmelzen abhängig von ihren Dichtezonen zu impfen, d.h. in den hochliegenden Zonen mit Keimen, die schwere Kristalle bilden, und in den unteren Zonen mit solchen, die leichte Kristalle bilden. Dabei wurde erwartet, dass die entstehenden schweren Kristalle in der Schmelze absinken, während die leichten Kristalle aufsteigen, womit nach jeder Aufschmelzung ein Gleichgewicht hergestellt werden sollte.

Das kann jedoch nicht befriedigend funktionieren. Zunächst einmal entstehen Kristalle verschiedener Energiedichten, und diese kristallisieren unterschiedlich schnell, die schweren Kristalle bilden sich langsamer als die leichten. Zudem wird das Absinken der schweren Anteile und das Aufsteigen der leichten Anteile mit fortschreitender Kristallisation durch die sich in der Schwebe befindenden verschiedenen Kristalle zunehmend behindert. Der Ablauf der Vorgänge ist praktisch unkontrollierbar.

Andere Vorschläge gehen dahin, die rekristallisierende Schmelze durch Umpumpen oder Rühren in Bewegung zu halten. Diese Methode zeigt zu Beginn des Kristallisationsvorganges befriedigende Resultate, die Effektivität nimmt aber sehr schnell ab, sobald sich an Austauschern, Pumpen oder Rührmechanismen Kristallschichten bilden. Die Pumpen und Rührer versagen dann schnell. Ausserdem sind solche Anlagen wartungsintensiv und können wegen der Abrasion und Korrosion nur aus teuren Materialien hergestellt werden.

Weiter wären noch Vorschläge zu erwähnen, nach denen die sich bildenden Kristallschichten laufend abgeschabt und der Restschmelze wieder zugeführt werden. Bei den für einen grösseren Speicher (beispielsweise für Gebäudeheizung) erforderlichen grossen Mengen und Gewichten ist der Aufwand enorm, die Anlagen sind sehr störungsanfällig und unterliegen einem beträchtlichen Verschleiss. Sie erfordern aufwendige Ueberwachungseinrichtungen und arbeiten nicht geräuschlos. Ihr Wirkungsgrad ist nicht zufriedenstellend.

Auch Versuche, die Kristalle in Gelatine oder in Ton verschiedenster Strukturen einzubetten, haben nicht zum angestrebten Erfolg geführt. Einerseits weil diese Massen im heissen und im kalten Zustand nicht die gleiche Viskosität besitzen, und anderseits weil sie viel Volumen in Anspruch nehmen. Zudem kann eine Schmelze unter solchen Voraussetzungen kaum mehr wirkungsvoll geimpft werden.

Im Zusammenhang mit der Impfung ist noch auf ein anderes Problem hinzuweisen, das sich in den bekannten Latentwärmespeichern nicht immer befriedigend lösen lässt. Alle Schmelzen von Salzen oder Salzhydraten neigen zur Unterkühlung, d.h., die Temperatur bei Kristallisationsbeginn liegt u.U. bedeutend tiefer als der Schmelzpunkt. Die Masse muss sich nach dem Beginn der Kristallisation selbst wieder auf die Temperatur des Aggregatzustandswechsels aufheizen. Dadurch können beträchtliche Verluste entstehen. Ausserdem werden die Schmelztemperaturen in der Regel einem bestimmten Verwendungszweck zugeordnet. Während der Unterkühlungsphase liegen die Temperaturen dann zu tief und können nicht genutzt werden.

Die Aufgabe der Erfindung besteht darin, die geschilderten Unzulänglichkeiten zu vermeiden und einen Latentwärmespeicher mit einer Füllung, die wenigstens ein Speicher-Salz und/oder -Salzhydrat enthält, zur Verfügung zu stellen, in welchem mit technischen Hilfsmitteln eine Entmischung und/oder zonenweise Dichteveränderung in der Füllung in geschmolzenem Zustand und während der Kristallisationsphase weitestgehend verhindert ist. Dabei soll eine einwandfreie Impfung in einfacher Weise möglich sein.

Die Aufgabe wird erfindungsgemäss dadurch gelöst, dass die Füllung zur Stabilisierung der Homogenität beim Aggregatzustandswechsel Fadenmoleküle von ⍺- und/oder β-Glucose in Form von Cellulose und/oder Stärke enthält, welchen Fadenmolekülen Verästelungsmoleküle aus wenigstens einem Alkaliperoxyd und/oder -salz und/oder wenigstens einem in der Speicher-Salz- bzw. -Salzhydratschmelze praktisch nicht löslichen Salz und/oder Doppelsalz eines dreiwertigen Metalls angelagert sind.

Nachstehend werden bevorzugte Ausführungsformen der Erfindung als Beipiele erläutert.

Der Latentwärmespeicher kann vorzugsweise Speicher-Salze und/oder -Salzhydrate in Form eines Eutektikums enthalten.

Die Fadenmoleküle können in der Füllung des Latentwärmespeichers in geschmolzenem Zustand, vorzugsweise gleichmässig verteilt, Fadengitter bilden, welche wie Feinstsiebe wirken und jede Entmischung und/oder zonenweise Dichteveränderung verhindern sowie während der Kristallisationsphase das Absinken schwerer Kristalle verhindern, während das Aufsteigen leichterer Anteile in der Schmelze kaum gebremst wird.

Natürlich sollten vorzugsweise alle Zusätze nicht nur in der geschmolzenen Füllung praktisch unlöslich sein, sondern auch nicht mit dieser Verbindungen eingehen und in derselben weder sedimentieren noch stratifizieren.

Die ⍺-Glucose, die als Stärke lineare, lange Makromoleküle bildet, eignet sich vorzugsweise für Salze und/oder Salzhydrate, die dazu neigen, grosse Kristalle zu bilden.

Die β-Glucose, die als Cellulose spiralverdrehte Makromoleküle bildet, eignet sich wegen ihrer guten Verkettungseigenschaften vorzugsweise für Salze und/oder Salzhydrate, die kleine Kristalle bilden.

Den Fadenmolekülen aus Glucose werden Fremdmoleküle an- und/oder eingelagert, die möglichst stark ver- ästelt sind. Diese Fremdmoleküle sind Alkaliperoxyde
und/oder -salze und/oder praktisch nicht lösliche Salze und/oder Doppelsalze von dreiwertigen Metallen, wobei Zusammensetzungen der Formel $Me^{+I}$ $Me^{+III}$ $(SO_4)_2 \cdot$
$12 H_2O$, in welcher $Me^{+I}$ Na, K, Rb, Cs und/oder $NH_4$ bedeutet und $Me^{+III}$ Al, Sc, Cr, Fe und/oder Co bedeutet,
in der Regel die besten Resultate bringen. Alkaliperoxyde und/oder -salze werden vorzugsweise in einem Molverhältnis von etwa 1:1, bezogen auf Glucosereste, eingesetzt, während bei Salzen bzw. Doppelsalzen von dreiwertigen Metallen, insbesondere Al, Sc, Cr, Fe und/oder
Co, das bevorzugte Molverhältnis etwa 0,5 : 1 beträgt.
Die Anlagerungen verästeln die Stärke- und/oder Celluloseketten und stabilisieren damit die Schmelzen der
Salze und/oder Salzhydrate, denen die behandelten Fadenmoleküle zugesetzt werden. Durch die starke Verästelung wird ausserdem während der Rekristallisationsphase die Bildung grosser Kristalle eingedämmt, was
hinsichtlich der Wahl der Behälterwerkstoffe von grosser Bedeutung sein kann. Sich entmischende Schmelzen
von Salzen und/oder Salzhydraten werden durch die verästelten Fadengitter wirksam in kleine Parzellen unterteilt, so dass eine vollständige Rekristallisation
möglich ist.

Die beschriebenen Wirkungen werden schon mit
sehr kleinen Zusätzen von behandelten Stärke- und/oder
Cellulose-Fadenmolekülen von 0,05 bis 1 Gew.% Stärke
und/oder Cellulose, vorzugsweise 0,1 bis 0,3 Gew.%
Stärke und/oder Cellulose, bezogen auf das Gesamtgewicht von Speicher-Salz bzw. -Salzhydrat der Füllung
eines Latentwärmespeichers, erzielt. Diese kleinen Zusätze reduzieren die ausbeutbare Energie der Wärmespeicher praktisch nicht.

Dank der angegebenen Zusätze werden in einem
Latentwärmespeicher bei der Wärmezufuhr regelmässige
homogene Schmelzen und bei der Rekristallisation durchgehend gleiche Kristallbildungen erreicht. Dadurch ist
es auch möglich, zur Verhinderung einer Unterkühlung in geeigneter Weise isomorph, isotypisch oder epitaxisch zu impfen, ohne dass dabei verschiedene Zonen berücksichtigt werden müssten. Es ist sogar möglich, lediglich eine Sonde in die Schmelze einzuführen, die in der Temperatur unter dem kritischen Unterkühlungspunkt liegt, oder eine fest im Wärmespeicher angeordnete Sonde mittels eines Kühlmittels oder mit einem Peltier--Element kurzzeitig abzukühlen, um die Kristallisation im genauen Temperaturniveau, etwa gleich dem Schmelzpunkt, einzuleiten. Für Speicher-Salze und/oder -Salzhydrate, die sich während des Schmelzvorganges nicht entbinden, können auch wasserarme oder wasserfreie gleiche Verbindungen zur Impfung herangezogen werden.

Beispiel 1

300g Cellulose (1,85 Mol Glucosereste) als trokkenes Pulver werden mit Wasser angefeuchtet, so dass die Cellulose quillt, und dann mit 240g pulverförmigem Natriumbichromat (0,92 Mol) vermischt, wobei sich die Verästelungsmoleküle an die gequollene Cellulose anlagern. Danach wird durch Verdampfen des Wassers getrocknet. Die Zusammensetzung wird dann in 300 kg Natriumacetat-3-Hydrat in Granulatform gleichmässig eingemischt.

Die Mischung wird dann als Füllung in einem Latentwärmespeicher verwendet, der einen Behälter für die Füllung aufweist, in welchem wasserdurchflossene Wärmetauscherrohre angeordnet sind. Das zirkulierende Wasser kann z.B. in der Nacht mit billigem Nachtstrom erhitzt werden, um die Füllung des Latentwärmespeichers zu schmelzen. Tagsüber kann die wieder kristallisierende Füllung die gespeicherte Schmelzwärme an das Wasser abgeben, das dann beispielsweise zum Heizen von Gebäudeteilen verwendet werden kann.

Beispiel 2

600 g Cellulose (3,7 Mol Glucosereste) als trockenes Pulver werden mit Wasser angefeuchtet, so dass die Cellulose quillt, und dann mit 600 g pulverförmigem Kaliumaluminiumsulfat (1,85 Mol) vermischt, wobei sich die Verästelungsmoleküle an die gequollene Cellulose anlagern. Danach wird durch Verdampfen des Wassers getrocknet. Die Zusammensetzung wird dann in 300 kg Natriumthiosulfat-5-Hydrat in Granulatform gleichmässig eingemischt.

Die Mischung wird dann als Füllung in einem Latentwärmespeicher verwendet, z.B. ähnlich wie im Beispiel 1 beschrieben.

Beispiel 3

450 g Stärke (2,78 Mol Glucosereste) als trockenes Pulver werden mit Wasser angefeuchtet, so dass die Stärke quillt, und dann mit 205 g pulverförmigem Kaliumchlorid (2,77 Mol) vermischt, wobei sich die Verästelungsmoleküle an die gequollene Stärke anlagern. Danach wird durch Verdampfen des Wassers getrocknet. Die Zusammensetzung wird dann in 300 kg Natriumsulfat--10-Hydrat in Granulatform gleichmässig eingemischt.

Die Mischung wird dann als Füllung in einem Latentwärmespeicher verwendet, z.B. ähnlich wie im Beispiel 1 beschrieben.

Wärmespeicherfüllungen von der Art der vorstehend beschriebenen eignen sich nicht nur für Grosswärmespeicher, z.B. für die Gebäudeheizung, sondern auch für kleine Wärmespeicher, insbesondere in Speisen- oder Getränkegefässen, in denen sie Speisen bzw. Getränke während längerer Zeit warm- oder kühl-halten können. Solche Gefässe sind beispielsweise Teller oder auch Schüsseln, Platten oder andere Behälter, die auf den Esstisch aufgestellt werden und/oder in denen Speisen transportiert werden können. Für den letzteren Zweck, beispielsweise bei der zentralisierten Verpflegung von Anstalten, Grossbetrieben, Alterswohnungen usw., werden die Platten oder Behälter zweckmässig in einem isolierenden Aussenbehälter untergebracht. Die Gefässe sind doppelwandig und enthalten zwischen den beiden Wänden die Wärmespeicherfüllung.

In gleicher Weise kann eine Wärmespeicherfüllung auch in einer Speisewärmeplatte enthalten sein, auf welche auf dem Esstisch Schüsseln oder Platten mit warmzuhaltenden Speisen gestellt werden können.

Bei solchen Kleinwärmespeichern in Speisen- oder Getränkegefässen oder Speisewärmeplatten, die in der Regel in schnellem Takt in grossen Stückzahlen hergestellt werden, kann das Einfüllen von geschmolzenem Speicher-Salz und/oder -Salzhydrat in die relativ kleinen Hohlräume mit Problemen verbunden und umständlich sein, weil die Schmelze in der Regel dickflüssig ist, so dass sich Lufteinschlüsse in den Hohlräumen kaum vermeiden lassen, und die Dosierung schwierig ist bzw. die Dosierorgane leicht verkrusten.

Diese Probleme lassen sich umgehen, wenn man zuerst einen offenporigen, schwammartigen Schaumkunststoffkörper vorbestimmter Form herstellt und die Salz- und/oder Salzhydratfüllung in die Poren dieses Körpers einbringt und dann diesen Körper bei der Herstellung der Speisen- oder Getränkegefässe oder Speisewärmeplatten in deren doppelte Wand einbaut. In dieser

- 9 -

Weise ist eine Serienfertigung der Speisen- oder Getränkegefässe oder Speisewärmeplatten ohne Schwierigkeiten möglich. In diesen ist dann die Füllung des Latentwärmespeichers in den Poren eines offenporigen Schaumkunststoffkörpers aufgenommen.

Der Schaumkunststoffkörper kann aus fast jedem beliebigen Schaumkunststoff bestehen, z.B. aus geschäumtem Polyurethan, Polypropylen, Polyäthylen oder Acrylnitril-Butadien-Styrol-Polymer. Auch das Raumgewicht des Schaumkunststoffes ist nicht kritisch, es kann z.B. zwischen 16 g/l und 40 g/l liegen.

Das Einbringen der Salz- und/oder Salzhydratfüllung in die Poren des Schaumkunststoffkörpers kann in einfacher Weise so erfolgen, dass man den Schaumkunststoffkörper in zusammengepresstem Zustand in eine Salz- und/oder Salzhydratschmelze eintaucht und sich darin ausdehnen lässt, so dass er sich mit Schmelze vollsaugt, worauf er aus der Schmelze herausgenommen wird.

- 1 -

Patentansprüche

1. Latentwärmespeicher mit einer Füllung, die wenigstens ein Speicher-Salz und/oder -Salzhydrat enthält, dadurch gekennzeichnet, dass die Füllung zur Stabilisierung der Homogenität beim Aggregatzustandswechsel Fadenmoleküle von $\alpha$- und/oder $\beta$-Glucose in Form von Cellulose und/oder Stärke enthält, welchen Fadenmolekülen Verästelungsmoleküle aus wenigstens einem Alkaliperoxyd und/oder -salz und/oder wenigstens einem in der Speicher-Salz- bzw. -Salzhydratschmelze praktisch nicht löslichen Salz und/oder Doppelsalz eines dreiwertigen Metalls angelagert sind.

2. Latentwärmespeicher nach Anspruch 1, dadurch gekennzeichnet, dass die Cellulose- und/oder Stärke- -Fadenmoleküle in der Salz- und/oder Salzhydratfüllung gleichmässig verteilt sind.

3. Latentwärmespeicher nach Anspruch 1 oder 2, dadurch gekennzeichnet, dass die Cellulose- und/oder Stärke-Fadenmoleküle insgesamt in einer Menge von 0,05 bis 1 Gew.%, bezogen auf das Gesamtgewicht von Speicher-Salz und/oder -Salzhydrat, in der Füllung vorliegen.

4. Latentwärmespeicher nach Anspruch 3, dadurch gekennzeichnet, dass die Cellulose- und/oder Stärke- -Fadenmoleküle insgesamt in einer Menge von 0,1 bis 0,3 Gew.%, bezogen auf das Gesamtgewicht von Speicher- -Salz und/oder -Salzhydrat, in der Füllung vorliegen.

5. Latentwärmespeicher nach einem der Ansprüche 1 bis 4, dadurch gekennzeichnet, dass die Füllung Speicher-Salze und/oder -Salzhydrate in Form eines Eutektikums enthält.

6. Latentwärmespeicher nach einem der Ansprüche 1 bis 5, dadurch gekennzeichnet, dass Salz bzw. Doppelsalz von dreiwertigem Metall den Cellulose- und/oder Stärke-Fadenmolekülen im Verhältnis von etwa 0,5 Mol Salz bzw. Doppelsalz : 1 Mol Glucosereste angelagert ist.

7. Latentwärmespeicher nach einem der Ansprüche 1 bis 6, dadurch gekennzeichnet, dass mindestens ein Doppelsalz der Formel $Me^{+I} Me^{+III} (SO_4)_2 . 12 H_2O$ den Cellulose- und/oder Stärke-Fadenmolekülen angelagert ist, in welcher Formel $Me^{+I}$ Na, K, Rb, Cs und/oder $NH_4$ bedeutet und $Me^{+III}$ Al, Sc, Cr, Fe und/oder Co bedeutet.

8. Latentwärmespeicher nach einem der Ansprüche 1 bis 5, dadurch gekennzeichnet, dass Alkaliperoxyd und/oder -salz den Cellulose- und/oder Stärke-Fadenmolekülen im Verhältnis von etwa 1 Mol Akaliperoxyd und/oder Salz : 1 Mol Glucosereste angelagert ist.

9. Latentwärmespeicher nach einem der Ansprüche 1 bis 8, dadurch gekennzeichnet, dass die Füllung in den Poren eines offenporigen Schaumkunststoffkörpers aufgenommen ist.

10. Verfahren zum Betrieb eines Latentwärmespeichers nach einem der Ansprüche 1 bis 8, dadurch gekennzeichnet, dass die geschmolzene Füllung für die Wärmeabgabe mit wasserarmen oder wasserfreien Molekülen der gleichen Zusammensetzung wie das Speicher-Salz bzw. -Salzhydrat geimpft wird.

11. Verfahren zum Betrieb eines Latentwärmespeichers nach einem der Ansprüche 1 bis 8, dadurch gekennzeichnet, dass die geschmolzene Füllung für die Wärmeabgabe mit einer Sonde geimpft wird, die unter den kritischen Unterkühlungspunkt der Schmelze abgekühlt ist oder wird.

12. Verwendung eines Latentwärmespeichers nach einem der Ansprüche 1 bis 9 in einem Speisen- oder Getränkegefäss oder einer Speisewärmeplatte zum Warm- oder Kühlhalten von Speisen oder Getränken.

Europäisches Patentamt

## EUROPÄISCHER RECHERCHENBERICHT

EP 84 10 7228

## EINSCHLÄGIGE DOKUMENTE —

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | GB-A-2 010 468 (WALLSTEN) <br> * Ansprüche 1,2,8 * | 1,2,5 | C 09 K .5/06 |
| A | US-A-4 292 189 (CHEN) <br> * Anspruch 1; Spalte 2, Zeilen 57-63 * | 1,2,5 | |
| A | FR-A-2 078 280 (VAMUS) <br> * Ansprüche 1,6 * | 1 | |
| A | PATENTS ABSTRACTS OF JAPAN, Band 7, Nr. 68 (M-201)[1213], 19. März 1983; & JP - A - 57 210 297 (TOKYO SHIBAURA DENKI K.K.) 23.12.1982 <br> * Zusammenfassung * | 1 | |

| | RECHERCHIERTE SACHGEBIETE (Int. Cl.4) |
|---|---|
| | C 09 K |

Der vorliegende Recherchenbericht wurde für alle Patentansprüche erstellt.

| Recherchenort <br> DEN HAAG | Abschlußdatum der Recherche <br> 18-12-1984 | Prüfer <br> NICOLAS H.J.F. |
|---|---|---|